# EUROPEAN PATENT APPLICATION

(11) **EP 2 293 030 A1**
(43) Date of publication of application: **09.03.2011**
(21) Application number: 09772579.0
(22) Date of filing: 15.04.2009
(51) Int. Cl.: G01G 19/393

(54) **METHOD FOR SIMULTANEOUSLY FORMING MULTIPLE BATCHES OF INDIVIDUAL ELEMENTS OF FRUIT AND VEGETABLE PRODUCTS OR OTHER PRODUCTS BY COMBINING BATCHES OF SELECTED PRE-WEIGHED ELEMENTS USING A COMBINATION ALGORITHM**

(30) Priority: 30.06.2008 ES 200801956
(71) Applicant: Giro GH S.A., 08911 Badalona (ES)
(72) Inventor: SALOM ESPAÑA, José Lorenzo, E-46005 Valencia (ES)
(74) Representative: Durán Moya, Luis-Alfonso
(86) International application number: PCT/ES2009/000199
(87) International publication number: WO 2010/000890

(57) **Abstract**

The invention relates to a method for simultaneously forming multiple amounts of individual elements of fruit and vegetable products or other products by combining batches of selected pre-weighed elements using a combination algorithm. The method involves: simultaneously determining various groups of weighing hoppers from among the total number of full weighing hoppers available, with the aid of a combination algorithm, the product weight of each group of weighing hoppers corresponding to a complete dose; simultaneously feeding the pre-formed groups of weighing hoppers, each group for one dose, to individual feed channels leading to respective intermediate receiving hoppers provided with individual compartments, the number of which corresponds to the number of doses formed simultaneously; and simultaneously emptying said individual compartments by means of simultaneous activation of the corresponding valves for controlling the outlet leading to respective packaging devices.

## Description

The present invention relates to a method for forming batches or "doses" of a pre-determined amount for the packaging of fruit and vegetable elements or other types of elements within the final weighing values of each of said doses, within specified tolerances. The method is particularly applicable to feeding suitably weighed doses of elements of fruit and vegetable products for packaging and despatch. Any type of fruit or other vegetable product, such as potatoes or similar products, may be cited as an example, although the method according to the invention is not limited in its application and may be used for other types of consumer, industrial or other products.

In the known prior art, doses for packaging are obtained from particular weights by means of a static machine using combinatory methods which basically comprise a system for feeding the weighing vessels or weighing hoppers using transport components through vibration tracks or conveyor belts which discharge the elements transported into the weighing hoppers or into intermediate storage hoppers so that said hoppers can subsequently be emptied forming a complete dose which is taken to a transport system which will convey the dose to a machine for packaging said dose. The methods and therefore the machines known at present are characterised in that their way of working is based on successive or linked functions so that the product to be packaged coming from the feed system is supplied to the machine via an elevator, for example, and is then discharged via distribution trays onto vibration tracks or conveyor belts which take the product to the weighing hoppers. The tracks or belts arrive at the weighing hoppers each time said hoppers have been emptied and the method provides for the opening of a specified series of hoppers which are selected according to a particular combination to form a dose, said dose moving on to the packaging machine. The filling and emptying cycle is repeated sequentially throughout the work period.

Although the methods known at present fulfil their basic function of obtaining doses of a particular weight for packaging starting from individual elements of variable weight, they have the drawback of a high proportion of down time which originates basically from the sequential operating system which has been explained briefly above.

An object of the present invention is to disclose a novel method which, by noticeably reducing down time in the set of operations for grouping the individual elements forming doses of elements for packaging, can substantially increase the productivity of the methods and machines known at present.

The new method is based fundamentally on a combination of operations which allows them to overlap so that the downtime is reduced to a fraction of that which is currently typical of known methods. Accordingly, once the hoppers are full various groups of hoppers are determined simultaneously in such a way that each group provides a complete dose. Although the number of groups may be variable, in a preferred embodiment two groups of hoppers are specified, in other words, two simultaneous doses. This is particularly advantageous since in a conventional system there is a possibility when determining doses successively that a hopper which participates in the first dose is required to complete a second dose, whereas with simultaneous calculation all the possibilities are analysed. With the sequential method, once a dose has been discharged, there is a possibility that a second dose cannot be completed with the remaining hoppers, and it will therefore be necessary to wait for the empty hoppers to be filled before the next dose can be selected. In the method according to the present invention, when the corresponding hoppers have been discharged for the multiple doses which have been calculated, the control system decides whether the hoppers that have not participated in the formation of the doses being discharged can be refilled while those that have indeed participated are being discharged. The filling cycle time is therefore reduced and there is also a reduction in the total time because of the simultaneous discharge of the simultaneously selected multiple doses, that is to say, the two simultaneously selected doses where the multiplicity is two. All of which means that with the application of the novel method, higher production can be achieved with a smaller number of mechanical devices in the corresponding machine compared with the methods and machines known at present.

The method comprises a precise pre-weighing operation related to the formation of groups of weighing hoppers for a dose, after assigning variable weights to each hopper in the group, and after assessing the relation between the weight discharged per time unit through the feed tracks, so as to be able to adjust the actual discharge times for each weighing hopper by adjusting them in real time to any variation arising in the elements supplied at any time. Thus pre-weighing is achieved in which the previously selected weighing hoppers of a group make up a final weight very approximately that of a dose, which is what is required. The method also comprises the arrangement of a series of weighing hoppers as a reserve, so that together there is a rapid determination of the combinations of weighing hoppers that can produce a dose for packaging and despatch, and this represents the essence of the novel method based on the simultaneous determination of various combinations of weighing hoppers to make up various simultaneous weighings.

Following the pre-weighing operation the actual weighing of the weighing hoppers is performed to determine the precise combination to obtain the weight of a dose.

In performing the method according to the present invention, the control of the overall operation of the machine is fundamental, this being made by using a central controller which through special sensors captures continuous information on the weights per unit of time of the elements supplied to the different hoppers, the filling times of said hoppers according to said filling speeds, the precise weights of the different hoppers after filling, the combination of the different weighed hoppers using a special algorithm which by combining various groups of hoppers forms sets of hoppers which together supply the precise filling weight, while meeting the condition that at least two groups of hoppers are formed simultaneously which together give the total weight required and that in forming said two or more groups of hoppers to form a specified combined weight there is no repetition of any of the pre-weighed hoppers. Thus, the functional algorithm incorporated in the central controller makes possible the simultaneous formation of multiple groups of hoppers the sum of which provides the precise weight required for each of the groups, and since there is no simultaneity of hoppers in forming the groups, said groups may be made available continuously to the filling tracks with no interruptions of any kind. The control algorithm will also take account of the exact weights of the reserve weighings to use them at any time to form groups of hoppers making up complete weights.

Similarly, the algorithm for forming groups of individual batches for each dose selects the routes between the individual batches of each group forming a dose in such a way that minimum distances are travelled thus reducing the formation time of an individual dose.

The method is combined with multiple type intermediate hoppers which receive the doses, from which said doses are supplied to the feed tracks of the packaging devices, the hoppers of which are provided with multiple compartments each corresponding to a dose and each compartment having an individual outlet, so that after the simultaneous discharge of the two or more previously determined doses by combining the corresponding weighing hoppers, the corresponding outlets of the multiple intermediate hopper open simultaneously to simultaneously feed the various packaging devices.

It will therefore be understood that using the method according to the present invention it is possible to substantially increase the productivity of currently known methods and machines by correspondingly reducing down time through performing operations simultaneously and increasing the number of packaging operations per unit of time.

It should also be understood that the method according to the invention may have many variants provided that said variants are within the scope of the following claims.

## Claims

1. Method for simultaneously forming multiple batches of individual elements of fruit and vegetable products or other products by combining batches of selected pre-weighed elements using a combination algorithm, of the type that comprises the filling of multiple weighing hoppers so as to subsequently empty them on tracks feeding packaging devices, by a combination of weighing hoppers calculated to obtain the individual weight of a dose, **characterised by** the simultaneous and continuous determination of various groups of hoppers, each group having the combined weight of a dose, starting from the total number of available full weighing hoppers, by means of the use of a combination algorithm, the weight of product for each group of weighing hoppers corresponding to a complete dose and the preformed groups of weighing hoppers, each group providing one dose, simultaneously feeding individual feed tracks which each lead to intermediate receiving hoppers provided with individual compartments the number of which corresponds to that of the simultaneously formed doses, and simultaneously emptying said individual compartments by the simultaneous actuation of the corresponding outlet control valves to respective packaging devices.

2. Method for simultaneously forming multiple batches of individual elements of fruit and vegetable products or other products by combining batches of selected pre-weighed elements using a combination algorithm according to claim 1, **characterised in that** the combination algorithm gives instructions for forming groups of individual batches the sum of which is equal to a dose, avoiding the repetition of individual batches in different groups forming the different doses.

3. Method for simultaneously forming multiple batches of individual elements of fruit and vegetable products or other products by combining batches of selected pre-weighed elements using a combination algorithm according to claims 1 and 2, **characterised in that** the algorithm for forming the groups of individual batches for each dose selects the routes between the individual batches of each group forming a dose in such a way that the minimum distances are travelled thus reducing the formation time of an individual dose.

4. Method for simultaneously forming multiple batches of individual elements of fruit and vegetable products or other products by combining batches of selected pre-weighed elements using a combination algorithm according to claim 1, **characterised in that** the number of groups of weighing hoppers calculated simultaneously, together with the number of compartments of the intermediate hopper, and of outlets to the packaging devices is at least two.

5. Method for simultaneously forming multiple batches of individual elements of fruit and vegetable products or other products by combining batches of selected pre-weighed elements using a combination algorithm according to claim 1, **characterised in that** prior to filling the individual weighing hoppers a calculation is carried out in real time of the weight discharged into the feed tracks per unit of time, to adapt the filling times of each weighing hopper to the pre-determined values, which may vary for each of said hoppers so that a specified number of hoppers forming a group constitutes a dose.

6. Method for simultaneously forming multiple batches of individual elements of fruit and vegetable products or other products by combining batches of selected pre-weighed elements using a combination algorithm, according to any one of the preceding claims, **characterised in that** the determination of the number of groups of weighing hoppers to determine the expected number of individual doses is carried out after the actual weighing of each group of hoppers, also taking into account the individual weights of the reserve weighing hoppers in case any of the groups of weighing hoppers does not give the expected weight for a dose, within the tolerance.
